# EUROPEAN PATENT SPECIFICATION

(11) **EP 0 445 449 B1**
(45) Date of publication and mention of the grant of the patent: **19.07.1995**
(21) Application number: 90302387.7
(22) Date of filing: 06.03.1990
(51) Int. Cl.: H02J 13/00

(54) **Control and supervisory system for power distribution equipment**
Steuerung und Überwachungssystem für Leistungsverteilungsausrüstung
Système de commande et de supervision pour équipement de distribution de puissance

(43) Date of publication of application: 11.09.1991
(73) Proprietor: MITSUBISHI DENKI KABUSHIKI KAISHA, Tokyo (JP)
(72) Inventor: Arinobu, Ichiro, c/o Fukuyama Seisakusho, Fukuyama City, Hiroshima Prefecture (JP); Mizuhara, Hirohisa c/o Fukuyama Seisakusho, Fukuyama City, Hiroshima Prefecture (JP); Ishii, Yasuhiro, c/o Fukuyama Seisakusho, Fukuyama City, Hiroshima Prefecture (JP); Sakai, Katsuya, c/o Fukuyama Seisakusho, Fukuyama City, Hiroshima Prefecture (JP); Takahashi, Hiromitsu, c/o Fukuyama Seisakusho, Fukuyama City, Hiroshima Prefecture (JP)
(74) Representative: Hackett, Sean James

(56) References cited:
- EP-A- 0 163 572
- EP-A- 0 265 342
- WO-A-81/01350
- WO-A-89/12345
- US-A- 4 686 630
- US-A- 4 835 706
- AUTOMATISIERUNGSTECHNISCHE PRAXIS - ATP, no. 10, 31 October 1989, München, DE, pages 482-489; V. KLÜNDER : "GEBÄUDELEITSYSTEME IM AUFWÄRTSTREND"

## Description

### BACKGROUND OF THE INVENTION

The present invention relates to a control and supervisory system for power distribution equipment, and more particularly, it relates to a control and supervisory system which is able to make up a network from respective pieces of supervisory and control information about various kinds of power distribution devices including protective equipment such as non-fusible circuit breakers, earth-leakage breakers, etc., electromagnetic switches for on-off control, remote-controlled equipment, and metering equipment such as taransducers, watt-hour meters, etc.

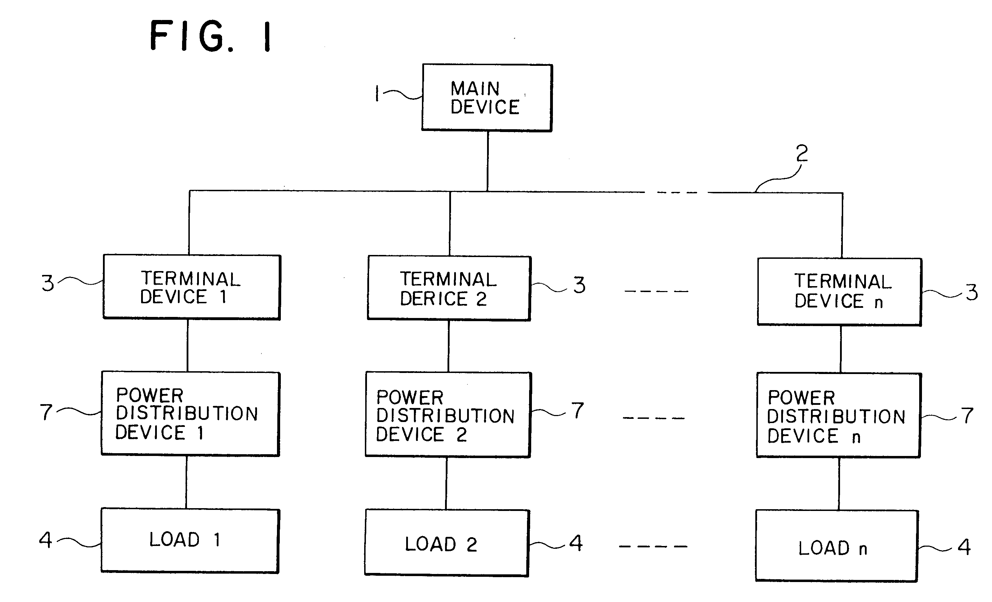

Among these types of conventional control systems, there has hitherto been known a typical power distribution equipment control and supervisory system which is diagrammatically shown in Fig. 1. The system illustrated generally includes a central control and supervisory unit (hereinafter referred to as a main device) 1 having a built-in microcomputer, and a plurality of terminal control and supervisory units (hereinafter referred to as terminal devices) 3 connected to the main device 1 through a signal transmission line 2 for controlling and supervising a plurality of power distribution devices 7 each of which controls, protects and supervises a corresponding electric load. Each of the terminal devices 3 receives a control signal transmitted from the main device 1 via the signal transmission line 2 and sends it out to the corresponding power distribution device 7, whereas a signal inputted from a power distribution device 7 to the corresponding terminal device 3 is returned to the main device 1 via the signal transmission line 2.

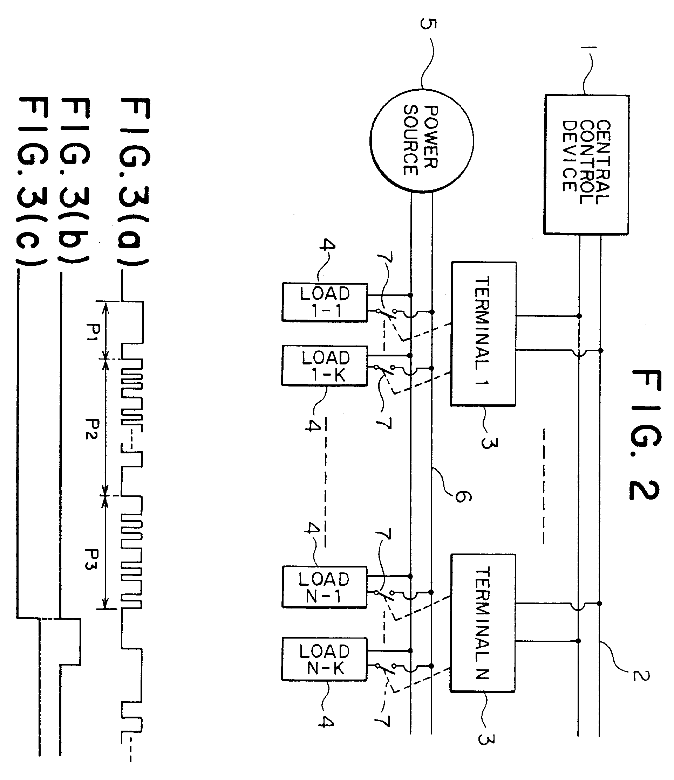

A more concrete example of the above mentioned control and supervisory system is illustrated in Fig. 2. The system illustrated is a load control apparatus for a power distribution system utilizing a private multiplex transmission as described in Japanese Patent Publication No. 59-29998. In Fig. 2, the load control apparatus includes a central control and supervisory device (i.e., a main device) 1, a plurality of terminal devices 3 each adapted to receive a control signal from the main device 1 through a signal transmission line 2, a multitude of electric loads 4, a commercial power source 5 for supplying power to the respective loads 4 through power lines 6, and a plurality of power distribution devices 7 in the form of on-off control switches provided one for each load 4 and adapted to be each operated by the control output of a corresponding terminal device 3 for controlling the power supply from the power source 5 to a corresponding electric load 4.

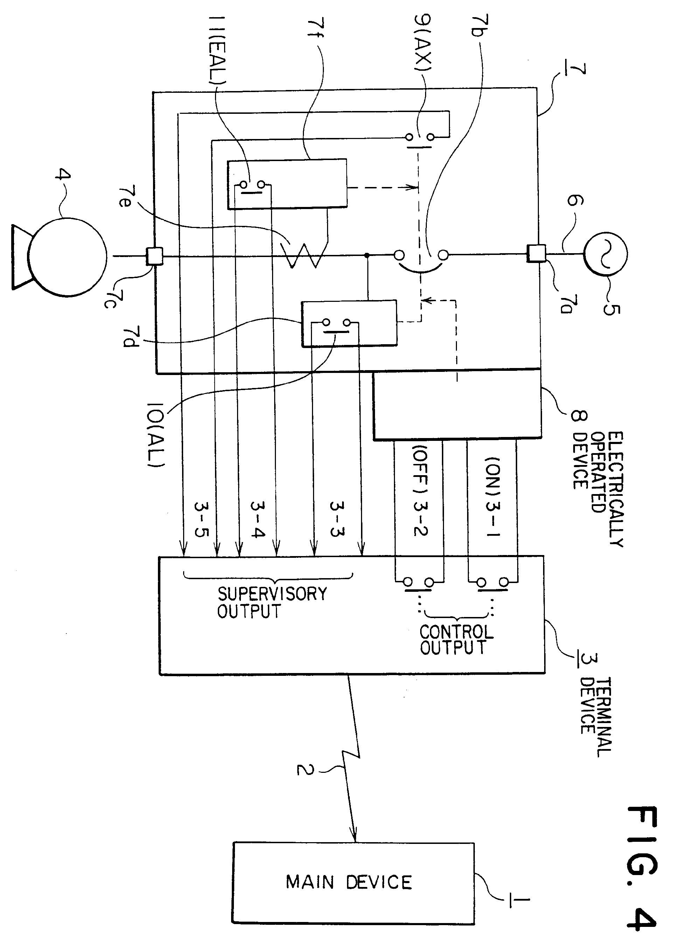

In this type of load control apparatus, a signal, which is shown in Fig. 3(a), is transmitted from the main device 1 to the terminal devices 4 through the signal transmission line 2. This type of control in the above load control apparatus is commonly performed in many other similar apparatuses which utilize private multiplex transmission. In Fig. 3(a), P₁ designates a start pulse indicative of the starting of a signal transmission; P₂ a terminal address pulse indicative of the addresses of the terminal devices 3; and P₃ a control pulse indicative of control signals inputted from the main device 1 to the terminal devices 3.

Each of the terminal devices 3 makes a comparison between its self terminal address stored therein and the terminal address pulse P₂ inputted thereto from the main device 1. If a particular terminal device 3 determines that they coincide with each other, then it generates an address-coincidence signal, as illustrated in Fig. 3(b), and a latch output, as illustrated in Fig. 3(c), whereby the corresponding control switch 7 is closed so as to supply power from the power source 5 to the corresponding electric load 4.

In this connection, it will be readily understood that in the case where the main device 1 is intended to perform supervisory operation, the above control procedure can also be utilized to realize the function of collecting information about the on/off conditions of switch signals which are inputted from the control switches 7 to the respective terminal devices 3.

In the following, a more concrete description will be made of the case in which this type of control and supervisory system is applied to controlling and supervising an earth-leakage breaker equipped with an electrically operated device. Fig. 4 shows one example of such a system. In this figure, the system illustrated includes a main device 1 in the form of a central control and supervisory unit, a terminal device 3 adapted to be operated by a control and supervisory signal which is inputted thereto from the main device 1 through a signal transmission line 2, an electric load 4 in the form of an electric motor, a main circuit power source 5, a power line 6 for supplying power from the main power source 5 to the load 4, and a power distribution device 7 in the form of an earth-leakage breaker 7 connected between the main circuit power source 5 and the load 4. The earth-leakage breaker 7 includes a power terminal 7a, a switch 7b, a load terminal 7c, an overcurrent trip 4d, a ZCT 7e, and an earth-leakage trip 7f.

The system further includes an electrically operated device 8 associated with the earth-leakage breaker 7 in such a manner as to externally operate the switch 7b, an auxiliary contact 9 adapted to be operated to close or open in response to the operation of the switch 7b, an alarm contact 10 operable to generate an output based on the output of the overcurrent trip 7d, and an earth-leakage alarm contact 11 operable to generate an output based on the operation of the earth-leakage trip 7f.

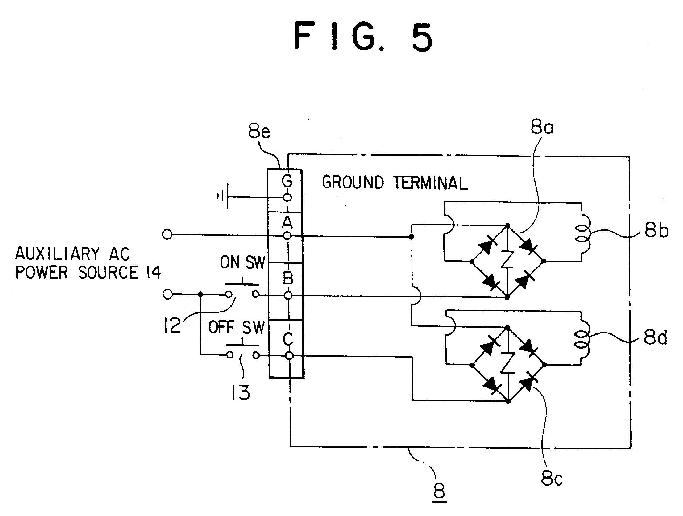

The electrically operated device 8 is operated by an external switch comprising an on-driving control contact 3-1 and an off-driving control contact 3-2 for externally operating the earth-leakage breaker 7 and a circuit breaker. The device 8 is generally constructed such that it can operate a manipulation member in the form of a nob, lever, arm, etc., of the earth-leakage breaker 7 and/or the circuit breaker from the outside. A concrete example of such an electrically operated device 8 is illustrated in Fig. 5. In this figure, the electrically operated device 8 comprises a first and a second diode-bridge circuit 8a, 8c each includidng a varistor for absorbing surge, a turn-on coil 8b which is operated by a DC current, a turn-off coil 8d which is operated by a DC current, and a connection terminal 8e having an earth terminal. The device 8 further includes an externally-operated turn-on switch 12, an externally-operated turn-off switch 13, and an auxiliary power source 14 for supplying power to the electrically operated device 8.

The operation of the above mentioned system for controlling and supervising the above earth-leakage breaker 7 by means of the main device 1 in a conventional manner will be described with particular reference to Fig. 4.

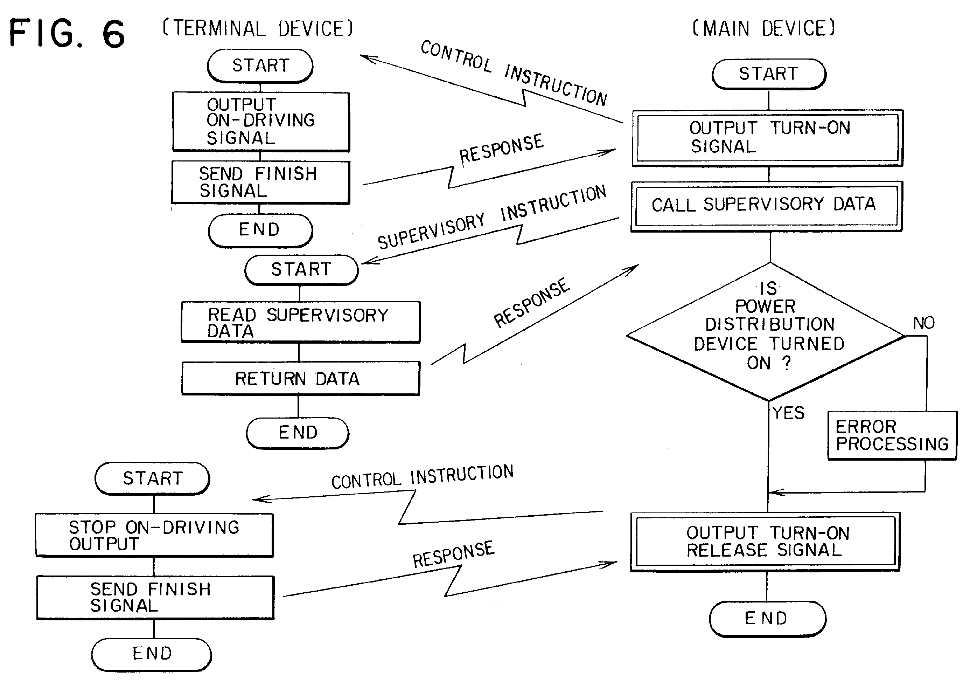

First, the case in which the main device 1 operates to turn on the earth-leakage breaker 7 will be described while referring to a flow chart of Fig. 6. The main device 1 outputs a control command in the form of an on-signal output to the terminal device 3 via the signal transmission line 2. Upon receipt of the control command from the main device 1, the terminal device 3 outputs it as an on-driving signal to thereby close the on-driving control contact 3-1 (see Fig. 4), which constitutes the turn-on switch 12 of Fig. 5. When the contact 3-1 has been fully closed, the terminal device 3 communicates a signal indicative of the closure of the contact 3-1 to the main device 1.

Subsequently, in order to determine whether the earth-leakage breaker 7 is operated in the normal manner by means of the on-driving output of the terminal deivce 3, the main device 1 sends to the terminal device 3 a supervisory command in the form of a supervisory data read-in command for reading the supervisory data about the earth-leakage breaker 7. Upon receipt of the supervisory command, the terminal device 3 reads, through lines 3-3, 3-4 and 3-5, the contact-input supervisory data (i.e., on/off signals from the AX, AL and EAL contacts 9, 10 and 11), as illustrated in Fig. 4, and sends it to the main device 1 via the signal transmission line 2.

Thereafter, the main device 1 operates to check, based on the supervisory date, whether or not the earth-leakage breaker 7 is performing the turn-on operation in the normal fashion. In other words, the main device 1 checks the contact signal AX which is inputted from the auxiliary contact 9 to the terminal device 3 through the lines 5. If it is determined that the earth-leakage breaker 7 is operating in the normal fashion, the main device 1 sends to the terminal device 3 a turn-on signal release command for terminating the on-driving output of the control output contact 3-1, so that the terminal device 3 is operated to open the turn-on switch 12 of Fig. 5 and terminate the on-driving output. After the termination of the on-driving output, the terminal device 3 communicates the termination to the main device 1 so that the main device 1 finishes the on-driving operation of the earth-leakage breaker 8.

On the other hand, if it is determined that the operation of the earth-leakage breaker 7 is abnormal, an error proccessing is performed in accordance with a prescribed procedure, and then the main device 1 sends to the terminal device 3 an on-signal release command for terminating the on-signal output, whereby the terminal device 3 is operated to terminate the on-driving output. After the finishing of the on-driving output terminating operation, the terminal device 3 communicates the finishing of the terminating operation to the main device 1.

As can be seen from the foregoing description, in the conventional control and supervisory system described above, the main device 1 has to send to the terminal device 3 a predetermined control procedure as required for the above control and supervisory operations so as to directly control the power distribution device 7 such as the earth-leakage breaker through the terminal device 3. Therefore, it is necessary for the main device 1 to prepare and store the required control and supervisory procedures.

With the conventional power distribution device control and supervisory system as described above in which varying kinds of groups of power distribution devices are connected to form a kind of network, however, a minimum unit for controlling and supersiving is constituted by an output relay contact such as the on-driving or off-driving control output contact 3-1, 3-2 or by a contact input signal from the AX, AL or EAL contact, as shown in Fig. 4, so that the main device 1 is necessarily required to output a control or supervisory command in accordance with a predetermined algorisum which is defined by a specific control and supervisory procedure intrinsic to the respective power distribution devices. As a result, the control and supervisory procedures to be stored in the main device 1 become tremendous, increasing the processing time required for executing one control or supervisory command as well as resulting in a very low efficiency in utilization of transmission paths.

Furthermore, engineers or programmers, who prepare control and supervisory procedures for the main device, have to be familiar with the procedures for permitted and inhibited operations of all the power distribution equipment to be connected with the main device so that algorisums to be prepared are accordingly increased in number and volume, and become much more complicated.

### SUMMARY OF THE INVENTION

Accordingly, the present invention is intended to obviate the above mentioned problems of the prior art.

An object of the present invention is to provide a novel and improved control and supervisory system for power distribution equipment which is able to control and/or supervise a plurality of power distribution devices in an extremely simple, high-speed and efficient manner without requiring any vast and complete knowledge of permitted and inhibited operations of varying kinds of power distribution devices to be connected, as well as of the control and supervisory procedures therefor.

Another object of the present invention is to provide a novel and improved control and supervisory system for power distribution equipment which is able to eliminate the inconvenience and troublesomeness of preparing, at a main device, a specific control and supervisory program for each of power distribution devices.

With the above objects in view, according to the present invention, there is provided a control and supervisory system for power distribution equipment according to claim 1.

Preferred features of the invention are set out in Claims 2 to 7.

Embodiments of the invention will now be described by way of example and with reference to the accompanying drawings.

### BRIEF DESCRIPTION OF THE DRAWINGS

Fig. 1 is a basic block diagram of a control and supervisory system for power distribution equipment;
Fig. 2 is a schematic view showing the general arrangement of a conventional control and supervisory system for power distribution equipment;
Fig. 3(a) is a timing chart of a signal which is transmitted from a main device to terminal devices of Fig. 2;
Fig. 3(b) is a timing chart of an address-coincidence signal which is generated by a terminal device of Fig. 2;
Fig. 3(c) is a timing chart of a latch output which is generated by a terminal device of Fig. 2;
Fig. 4 is a circuit diagram showing a concrete example of the control and supervisory system of Fig. 1 in which a power distribution device in the form of an earth-leakage breaker is connected with a terminal device;
Fig. 5 is a circuit diagram showing an example of an electrically operated device for use with an earth-leakage breaker or a circuit breaker;
Fig. 6 is a flow chart showing the transmission of signals between a main device and a terminal device according to a conventional control and supervisory system;
Fig. 7 is a basic functional block diagram showing a control and supervisory system for power distribution equipment according to one embodiment of the present invention, the system being applied for controlling and supervising an earth-leakage breake;
Fig. 8 is a schematic illustration showing an example of the structure of a transmission frame to be transmitted through a transmission path according to the present invention;
Fig. 9 is a flow chart showing the execution of a control instruction using a control command (i.e., an "ON" or "NV-ON" command) according to the present invention;
Fig. 10 is a flow chart showing an example of the process of generation of a control signal based on a control command (i.e., an "ON" or "NV-ON"command) at a terminal device according to the present invention;
Fig. 11 is a flow chart showing the operation of a supervisory instruction based on a supervisory command according to the present invention;
Fig. 12 is a table showing an example of supervisory information about an earth-leakage breaker generated according to the present invention;
Fig. 13 is a flow chart showing the operations of an alarm instruction and a control and supervisory instruction from a terminal device according to the present invention;

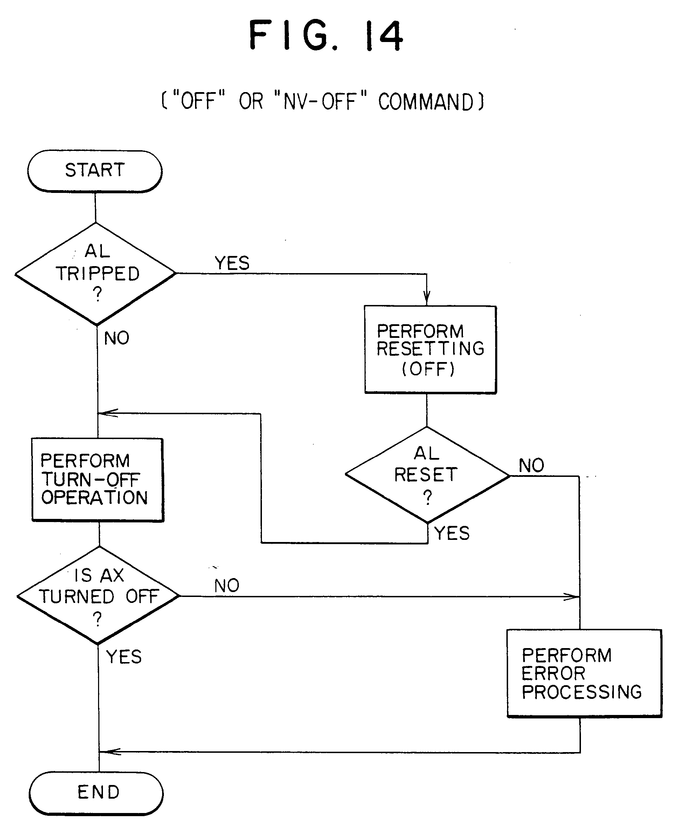

Fig. 14 is a flow chart showing an example of the generation of a control signal at a terminal device according to the present invention;
Fig. 15 is a functional block diagram showing a control and supervisory system for power distribution equipment according to another embodiment of the present invention;
Fig. 16 is a view similar to Fig. 15, but showing a further embodiment of the present invention;
Fig. 17 is a view similar to Fig. 15, but showing a yet further embodiment of the present invention;
Fig. 18 is a view similar to Fig. 15, but showing a further embodiment of the present invention;
Fig. 19 is a view similar to Fig. 15, but showing a further embodiment of the present invention;
Fig. 20 is a view similar to Fig. 15, but showing a further embodiment of the present invention;
Fig. 21 is a view similar to Fig. 15, but showing a further embodiment of the present invention;
Fig. 22 is a perspective view showing the external appearance of a concrete example of a terminal control and supervisory device according to the present invention.

### DESCRIPTION OF THE PREFERRED EMBODIMENTS

The present invention will now be described in detail with reference to a few presently preferred embodiments thereof as illustrated in the accompanying drawings.

A control and supervisory system of the present invention generally includes a main device in the form of a control and supervisory instruction device for outputting a control or supervisory command, and a plurality of terminal devices each in the form of a terminal control and supervisory device connected with at least one corresponding power distribution device which controls the power supply to a corresponding electric load.

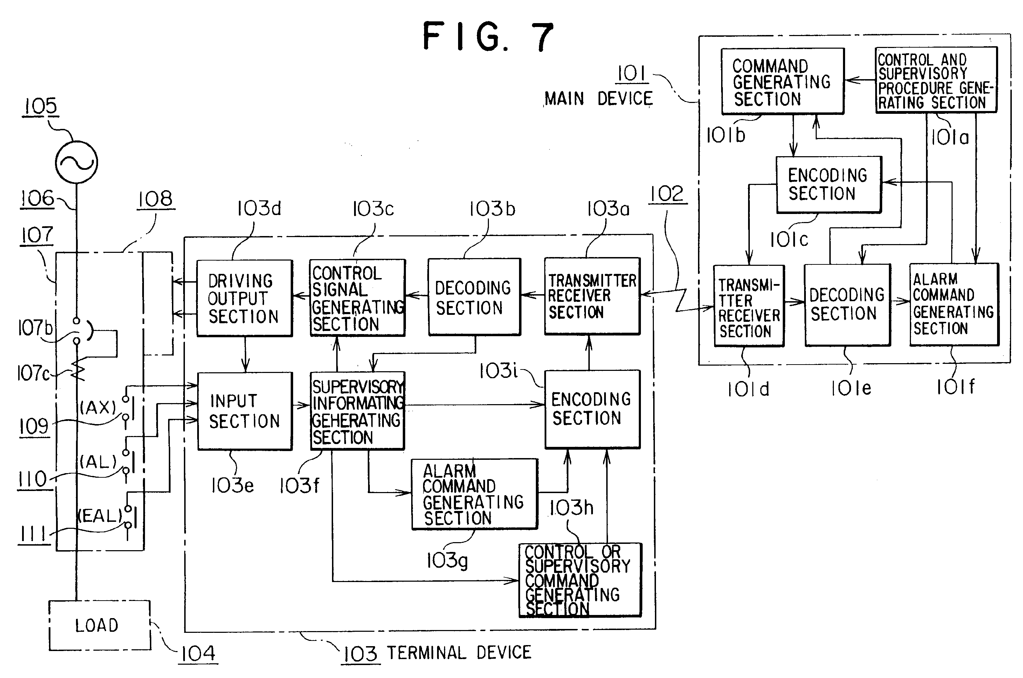

For the sake of simplicity in explanation, the case in which the control and supervisory system of the invention is applied for controlling and supervising the aforementioned conventional earth-leakage breaker of Fig. 4 will be described while referring to Fig. 7.

In Fig. 7, the control and supervisory system illustrated includes a control and supervisory instruction device 101 (hereinafter referred to as a main device) for outputting control or supervisory commands, a terminal control and supervisory device 103 (hereinafter referred to as a terminal device) which is adapted to receive the control or supervisory commands from the main device 101 via a signal transmission line 102 for controlling or supervising at least one power distribution device connected therewith, an electric load 104, an electric power source 105, a main circuit 106 for supplying electric power from the electric power source 105 to the load 104, a power distribution device 107 in the form of an earth-leakage breaker interposed in the main circuit 106, and an operation section 108 for the power distribution device in the form of an electrically operated switch connected to the terminal control and supervisory device 103 for opening and closing the earth-leakage breaker 107. Here, it is to be noted that although a single terminal device 103, a single power distribution device 107 and a single electric load 104 are illustrated in Fig. 7, a plurality of these elements may be employed. In this case, a plurality of power distribution devices each connected with an electric load may be classified into a plurality of groups each having a common function, and each of terminal devices controls and supervises a corresponding group of power distribution devices.

The main device 101 comprises a control and supervisory procedure generating section 101a for generating control and supervisory procedures for the above network system, a command generating section 101b for generating concrete control or supervisory commands in accordance with the control and supervisory procedures generated by the control and supervisory procedure generating section 101a, an encoding section 101c for encoding the commands into appropriate forms required for signal transmission, a transmitter-receiver section 101d for transmitting the encoded control or supervisory commands to the terminal device 103 and receiving signals therefrom through the transmission line 102, a decoding section 101e for decoding signals which are transmitted from the terminal device 103 and received by the transmitter-receiver section 101d, and an alarm command generating section 101f for analyzing the information decoded by the decoding section 101e and generating alarm commands which are transmitted to other terminal devices (not shown).

The terminal device 103 comprises a transmitter-receiver section 103a for receiving control or supervisory commands from the transmitter-receiver section 101d of the main device 101 and transmitting signals thereto through the transmission line 102, a decoding section 103b for decoding the control or supervisory commands received by the transmitter-receiver section 103a, a control signal generating section 103c for generating, based on the control commands decoded by the decoding section 103b, control signals indicative of appropriate control procedures suited to the control system of the corresponding power distribution device 107 connected to the terminal device 103, a driving output section 103d for driving, based on the control signals thus generated, the corresponding power distribution device 107 connected with the terminal device 103, an input section 103e for receiving data necessary for supervising the power distribution device 107, a supervisory information generating section 103f for generating, based on the data thus inputted to the input section 103e, concrete supervisory information required by the main device 101, an alarm command generating section 103g for generating, based on the supervisory information thus generated by the supervisory information generating section 103f, alarm commands which are to be inputted to the main device 101 or other terminal devices (not shown) as required when there is a need for alarming, a control or supervisory command generating section 103h for generating concrete control or supervisory commands when there is a need for transmitting the alarm commands to the other terminal devices, and an encoding section 103i for encoding the information or commands from the supervisory information generating section 103f, the alarm command generating section 103g, and the control and supervisory command generating section 103h into appropriate forms necessary for signal transmission.

The earth-leakage breaker 107, which is a power distribution and protective equipment, comprises a switching and breaker section 107b operable to cut off or break the main circuit 106 so as to isolate the electric power source 105 from the load 104 when the load 104 is subjected to overloading, or when short circuiting or earth leakage takes place in the load 104 or the main circuit 106, and an earth-leakage sensing section 107c for sensing an earth leakage in the load 104 or the main circuit 106.

Also, provisions are made for an auxiliary contact (AX) 109 for sensing the open or closed mode or condition of the switching and breaker section 107b of the earth-leakage breaker 107, an alarm contact (AL) 110 for sensing an overcurrent cut-off operation mode, or a short-circuit cut-off operation mode, or an earth-leakage cut-off operation mode (i.e., called as trip) of the earth-leakage breaker 107, and an earth-leakage alarm contact (EAL) 111 for sensing an earth-leakage operation mode (i.e., called as earth-leakage trip) of the earth-leakage breaker 107, The auxiliary contact 109, the alarm contact 110 and the earth-leakage alarm contact 111 are all connected to the input section 103e of the terminal control and supervisory device 103.

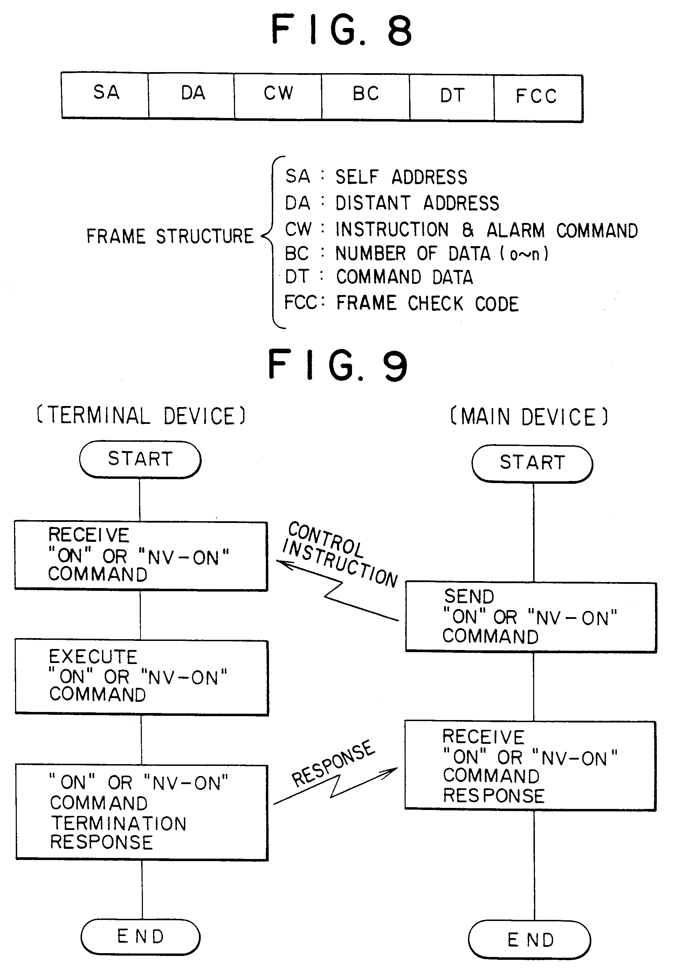

In the above embodiment, signal transmission between the main device 101 and the terminal device 103 is carried out by the use of a microcomputer. Fig. 8 illustrates an example of a frame structure required for such transmission. In this figure, the frame illustrated contains a self address (SA), an distant or opponent address (DA), a command (CW) for instructing or alarming according to the present invention, a data-number storage area (BC) for storing the numbers (e.g., o ∼ n) of the following data, data (DT) for the above instructing and alarming which are only used when needed, and a frame check code (FCC) for identifying the frame. The signal transmission between the main device 101 and the terminal device 103 is carried out with the above frame being as a unit.

Now, one example of the control instructing operation of the system of Fig. 7 as constructed above, in which a power distribution device in the form of an earth-leakage breaker (hereinafter abbreviated as NV) is to be turned on, will be described using a control command which is conceptionally common to, or intrinsic to a corresponding one of, varying power distribution devices to be controlled while referring to Fig. 9. Specifically, the control and supervisory procedure generating section 101a of the main device 101 generates, based on a prescribed program, a control procedure for turning on the earth-leakage breaker 107. The control procedure thus generated is then fed to the control and supervisory command generating section 101b where a predetermined instruction command is generated which takes the form of an "ON" command conceptionally common to power distribution devices 107 (only one of which is illustrated in Fig. 9), or of an "NV-ON" command intrinsic to a corresponding power distribution device 107 which is, in this case, an earth-leakage breaker. The instruction command thus generated is then fed to the encoding section 101c where CW, BC and DT as shown in Fig. 8 are arranged in order. The thus properly arranged instruction command is sent to the transmitter-receiver section 101d which then produces a frame, as illustrated in Fig. 8, which is transmitted to the terminal device 103 as an instruction command. In other words, as seen from Fig. 9, what is done by the main device 101 is to transmit the "ON" command or the "NV-ON" command to the terminal device 103.

Here, it is to be noted that the "ON" command is a conceptionally common control command which means conceptionally common control operations such as, for example, "closing a circuit", "starting an operation" and the like in cases where varying kinds of power distribution devices are to be controlled by the main device 101. In this embodiment, the "ON" command is utilized as a control command for closing the main circuit 106 through a circuit breaker which is, in this embodiment, the earth-leakage breaker 107.

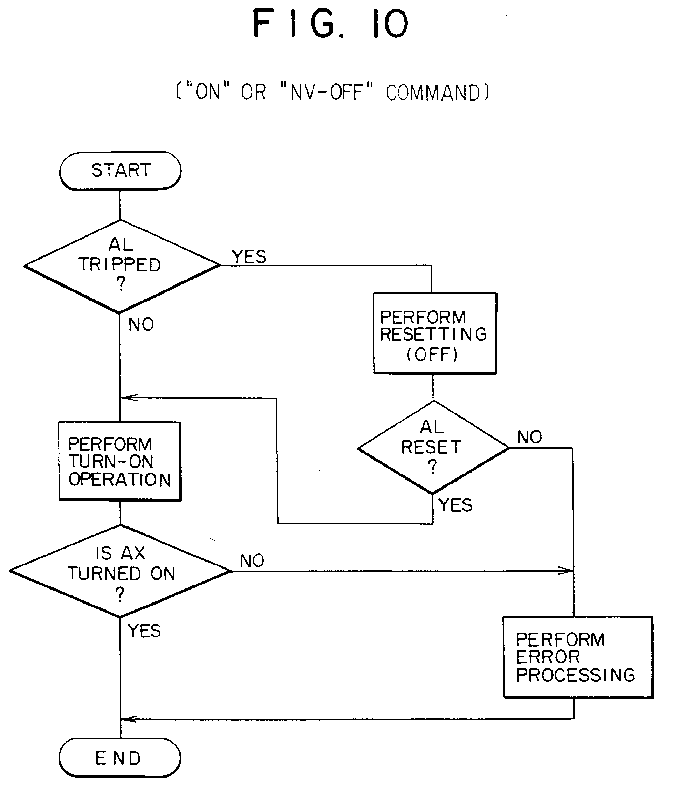

The terminal device 103 receives the "ON" or "NV-ON" command at the transmitter-receiver section 103a and there ascertains the transmission frame including SA, DA, CW, BC, DT and FCC as illustrated in Fig. 8. If it is determined by the transmitter-receiver section 103a that the DA in the frame is the same as the self station address of the terminal device 103, the CW, BC and DT in the frame are passed to the decoding section 103b where it is further determined whether the CW is a control instruction command or a supervisory instruction command. In this embodiment, the decoding section 103b determines the "ON" or "NV-ON" command to be a control command, and puts the control signal generating section 103c in operation. Thus, based on the CW and DT, the control signal generating section 103c generates an optimum "ON" operation procedure suited to the power distribution devices 107 connected therewith (in case of the "ON" command) or an optimum "ON" operation procedure suited to the earth-leakage breaker 107 connected therewith (in case of the "NV-ON" command). With the optimum "ON" operation procedure thus generated, the specific group of power distribution devices 107 connected with the terminal device 103 are controlled through the driving output section 103d. An example of a procedure for executing the "ON" or "NV-ON" command in this case is illustrated in Fig. 10.

First, from the supervisory data inputted to the input section 103e of the terminal device 103, it is determined whether or not the earth-leakage breaker 107 connected with the terminal device 103 is tripped due to an overcurrent, a short circuit or an earth leakage by checking the operating condition of the alarm contact (AL) 110. If there is no trip of the earth-leakage breaker 107, the electrically operated device 108, which is the same as the one 8 of Fig. 5, is turned on through the action of the driving output section 103d. Specifically, in Fig. 5, the driving output section 103d acts to close the operation switch 12 of the electrically operated device 108 for a predetermined length of time. Thereafter, from the supervisory data fed to the input section 103e of the terminal device 103, the on-off condition of the earth-leakage breaker 107 is determined by checking the condition of the anxiliary contact (AX) 109. If it is determined that the turn-on operation of the earth-leakage breaker 107 has been finished, then the execution of the "ON" or "NV-ON" command is terminated. On the other hand, if it is determined that the earth-leakage breaker 107 is tripped, a reset processing is performed prior to the turning on of the electrically operated device 108 in order to relieve the tripped condition. Here, it is to be noted that such a reset processing on an earth-leakage breaker, a circuit breaker or the like is generally performed in the same manner as in a turn-off operation, but in the case where a reset processing is independent of a turn-off operation, it is performed by an independent or separate resetting operation rather than a turn-off operation. Subsequently, the condition of the alarm contact (AL) 110 is checked again and if resetting has been finished, a turn-on operation as referred to above is carried out and the execution of the "ON" or "NV-ON" command is thus terminated. On the other hand, if resetting has not yet been finished, a prescribed error processing is performed and then the execution of the "ON" or "NV-ON" command is terminated.

Subsequently, the program returns to the processing shown in Fig. 9 where after the finishing of execution of the "ON" or "NV-ON" command, the terminal device 103 determines whether the "ON" or "NV-ON" command execution is a normal operation or an abnormal operation, and returns a response indicative of the result of such a determination to the main device 101, thus terminating the execution of the "ON" or "NV-ON" command therein.

Similarly, a turn-off operation, which is conceptionally opposite to a turn-on operation, is carried out so as to perform such a processing as illustrated in Fig. 10. In this figure, it will be obvious to those skilled in the art that a resetting operation can be omitted in cases where resetting can be performed in the same procedure as in a turn-off operation, as described above.

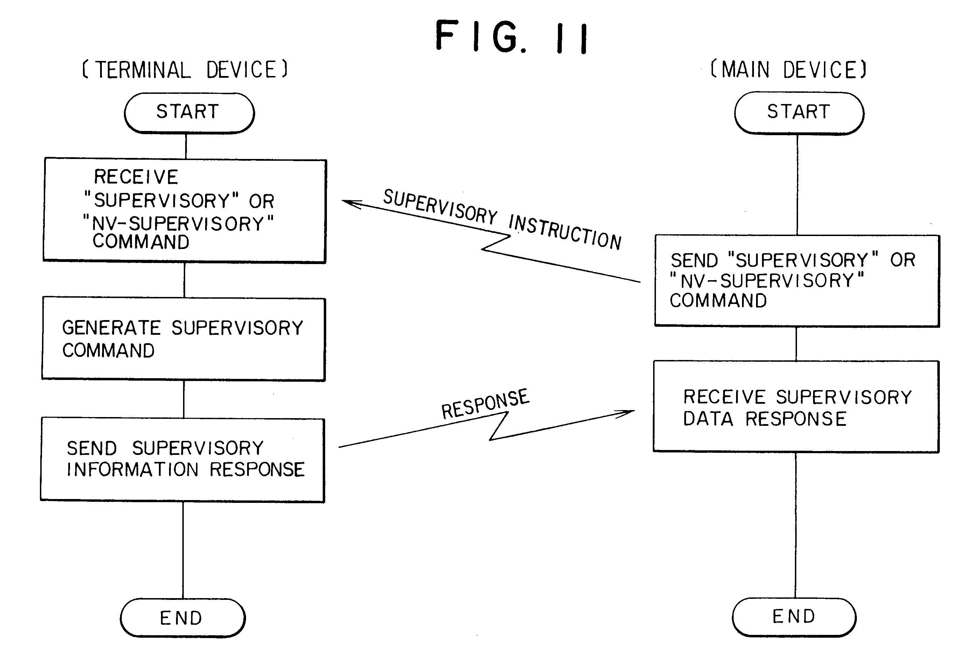

Next, the operation of a supervisory instruction will be described with particular reference to Fig. 11 which illustrates an example of a procedure for executing a "supervisory" command, which is conceptionally common to the power distribution devices 107 connected with the terminal device 103, or a "NV-supervisory" command, which is intrinsic to a corresponding power distribution device 107 (which is, in this case, an earth-leakage breaker) connected with the terminal device 103.

First, the main device 101 generates a "supervisory" or "NV-supervisory" command according to the same procedure as in the transmission of an "ON or "NV-ON" command, and sends it from the transmitter-receiver section 101d to the transmitter-receiver section 103a of the terminal device 103.

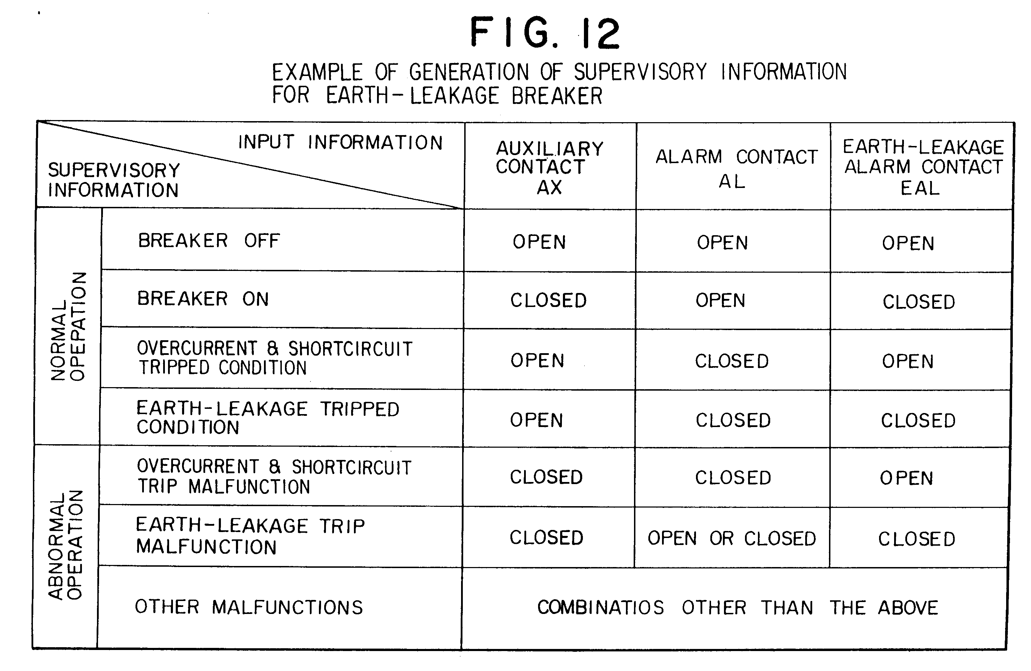

The decoding section 103b decodes the "supervisory" or "NV-supervisory" command from the main device 101, and determines whether or not CW in the command is a "supervisory" or "NV-supervisory" command code. If the answer is "YES", the supervisory information generating section 103f is operated to receive at the input section 103l supervisory data about the power distribution device 107 connected thereto, and generates, based on the supervisory data thus inputted, specific information as illustrated in Fig. 12.

Specifically, the supervisory information generating section 103f generates, based on three kinds of input information comprising auxiliary contact (AX) information, alarm contact (AL) information and earth-leakage alarm contact (EAL) information, seven kinds of supervisory information which comprises four normal operating modes including a breaker's "ON" condition, a breaker's "OFF" condition, an overcurrent/short-circuit tripped condition and an earth-leakage tripped condition, and three abnormal operating modes including a malfunction in the overcurrent/short-circuit tripping operation, a malfunction in the earth-leakage tripping operation, and other malfunctions. The above supervisory information is fed to the encoding section 103i where encoding such as, for example, generation of DT in the frame of Fig. 8 is performed based on the input supervisory information and the encoded information is then converted into a transmission frame which is in turn returned as a response to the main device 101, thus finishing the execution of the "supervisory" or "NV-supervisory" command.

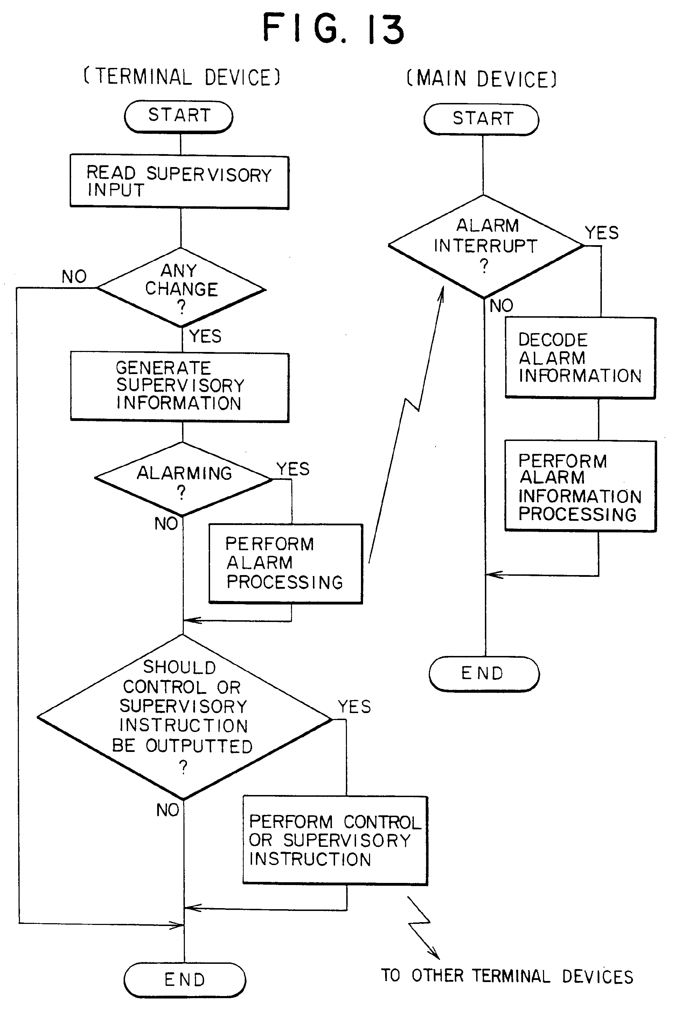

In the following, the operation of the terminal device 103 independent of the main device 101, including an alarming of abnormalities or changes in operation of the power distribution device 107 connected therewith, as well as an instruction for controlling or supervising other terminal devices (not shown), will be described with particular reference to Fig. 13.

The input section 103e of the terminal device 103 reads supervisory data inputted thereto, and the supervisory information generating section 103f determines whether there is a change in the supervisory data. If there is a change in the data, the supervisory information generating section 103f generates supervisory information which is, for example, shown in Fig. 12, and sends it to the alarm instruction generating section 103g where it is determined whether or not the supervisory information thus generated should be transmitted to the main device 101. If the answer is "YES", the supervisory information generating section 103g generates a CW for transmission, which is then sent to the encoding section 103i where an appropriate transmission frame containing CW, BC and DT is formed. This transmission frame is fed to the transmitter-receiver section 103a and it is, after having been added by SA, DA and FCC, transmitted to the transmitter-receiver section 101d of the main device 101.

The transmitter-receiver section 101d receives the transmission frame and collates the DA in the frame with the self station address thereof. If there is coincidence therebetween, then the transmission frame is sent to the decoding section 101e where it is determined whether or not the information from the terminal device 103 is an alarm instruction. If the anwser is "YES", the information is further passed to the alarm instruction generating section 101f where new alarm information about other terminal devices is produced as necessary according to a prescribed procedure stored therein. The new information thus produced is fed to the encoding section 101c and there encoded in an appropriate manner. The encoded information is then transmitted through the transmitter-receiver section 101d to the other terminal devices. In this connection, in cases where it is required that new control or supervisory information be produced by the decoding section 101e in accordance with a prescribed procedure, the alarm information is fed from the decoding section 101e to the control and supervisory instruction generating section 101b where a new control or supervisory instruction is produced. The new control or supervisory instruction is fed to the encoding section 101c where it is encoded and then transmitted through the transmitter-receiver section 101d to other terminal devices.

Returning now to Fig. 13, the case in which a control or supervisory command is outputted directly from a specific terminal device 103 to other terminal devices (not shown) on the basis of the supervisory information generated in the specific terminal device 103 will be described. The supervisory information generated by the supervisory information generating section 103f of the specific terminal device 103 is fed to the control and supervisory command generating section 103h where a new control or supervisory command is produced. The control or supervisory command is then fed to the encoding section 103i where a CW, BC and DT are generated and added thereto. The command containing the CW, BC and DT is further fed to the transmitter-receiver section 103a and then sent therefrom to other terminal devices. Here, it will be understood to those skilled in the art that the transmission system of the present invention is not limited to the specific type of transmission system as described above, but any type of transmission system can be utilized for the purposes of the invention. Thus, for example, contact signals each corresponding to a control or supervisory comman may be transmitted to terminal devices, or various types of multiplex transmission techniques such as those using a private line or a power line with the application of a microcomputer may also be employed.

Although the above embodiment as illustrated in Fig. 7 shows a basic processing flow for transmitting and responding to a control or supervisory command and an alarm command, another embodiment will be described in the following.

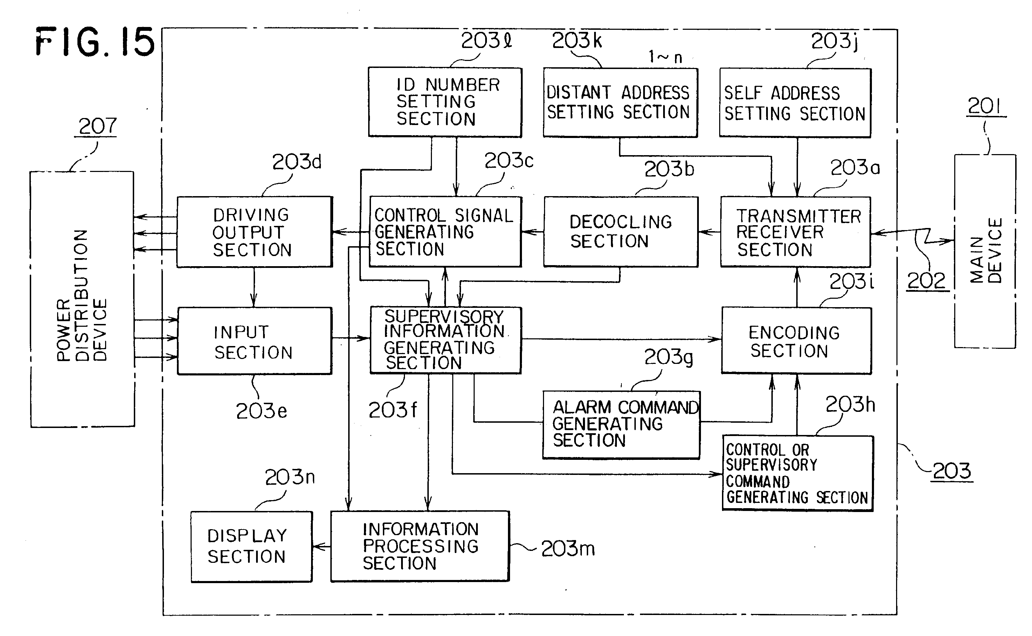

Fig. 15 shows another embodiment in which a terminal device 203 comprises, in addition to component sections 203a through 203i which are the same as those 103a through 103i of Fig. 7, a self address setting section 203j, a distant or opponent address setting section 203k, an ID number setting section 203l for setting specific ID numbers each corresponding to each kind of power distribution devices 207 (only one is illustrated) connected therewith (e.g., setting the ID Nos. of a circuit breaker as 01, an earth-leakage breaker as 02, an electromagnetic switch as 03, and the like), an information processing section 203m mounted on a surface of the terminal device 203 itself for processing information about the generation of control signals, supervisory information about the power distribution devices 207 connected with the terminal device 203 (e.g., conditons of "ON", "OFF", tripping, malfunctions and the like of the power distribution devices 207), and information about signal transmitting and receiving conditions, and a display section 203n also mounted on a surface of the terminal device 203 itself for displaying the information thus processed.

In this case, the provision of the self address setting section 203j and the distant address setting section 203k serves to give substantial flexibly to the system in coping with the problems of an extension, revision and the like thereof, and of the addition of control and supervisory systems as required. Also, if a plurality of distant address setting sections 203k are provided, it is possible to send control or supervisory commands or alarm commands to a plurality of terminal devices. Further, a control procedure such as an on-off control procedure and the like, a control signal generating procedure, a supervisory information generating procedure, and the like, which are different for respective power distribution devices, may be stored in the control signal generating section 203c and the supervisory information generating section 203f, so that a specific control signal generating procedure or a specific supervisory information generating procedure can be selected in accordance with a particular ID No. set by the ID number setting section 203l so as to supervise or control a power distribution device 207 corresponding to the set ID No. With this construction, only one kind of terminal device 203 can control and supervise a plurality of kinds of power distribution devices 207. The display section 203n enables an operator to visually observe, not indirectly through the main device 201 but directly, the operating conditions of the respective power distribution devices 207 and the transmission conditions between the terminal device 203 and the corresponding power distribution devices 207.

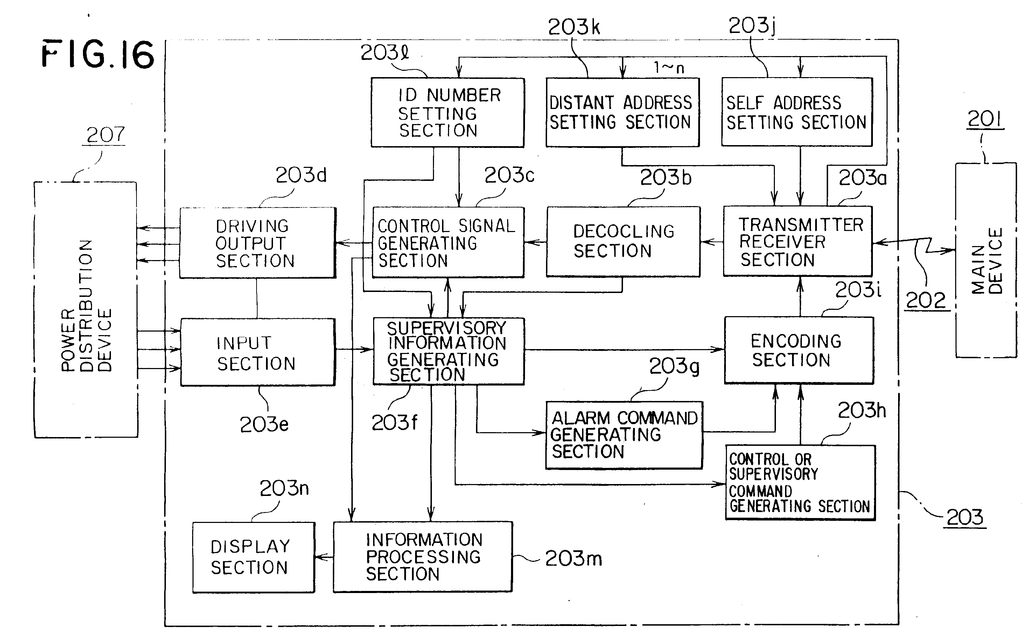

Fig. 16 shows a further embodment which is similar to the embodiment of Fig. 15 except for the fact that the terminal device 203 is constructed in such a manner that the values as set by the self address setting section 203j, the distant address setting section 203k and the ID number setting section 203l can be stored therein by an instuction from the main device 201 which is downloaded from the main device 201 to the respective sections 203j, 203k and 203l through the transmitter-receiver section 203a. In this case, the writing of such an instruction into the respective sections 203j, 203k and 203l can be carried out at the time of initialization of the system or during the operation thereof. In this embodiment, since the respective set values for these sections 203j, 203k and 203l can be changed by an instruction from the main device 201, if the kind or arrangement of the power distribution devices 207 is changed, the structure of the system can be readily adapted to such a change by simply changing the instruction of the main device 201 into an appropriate one.

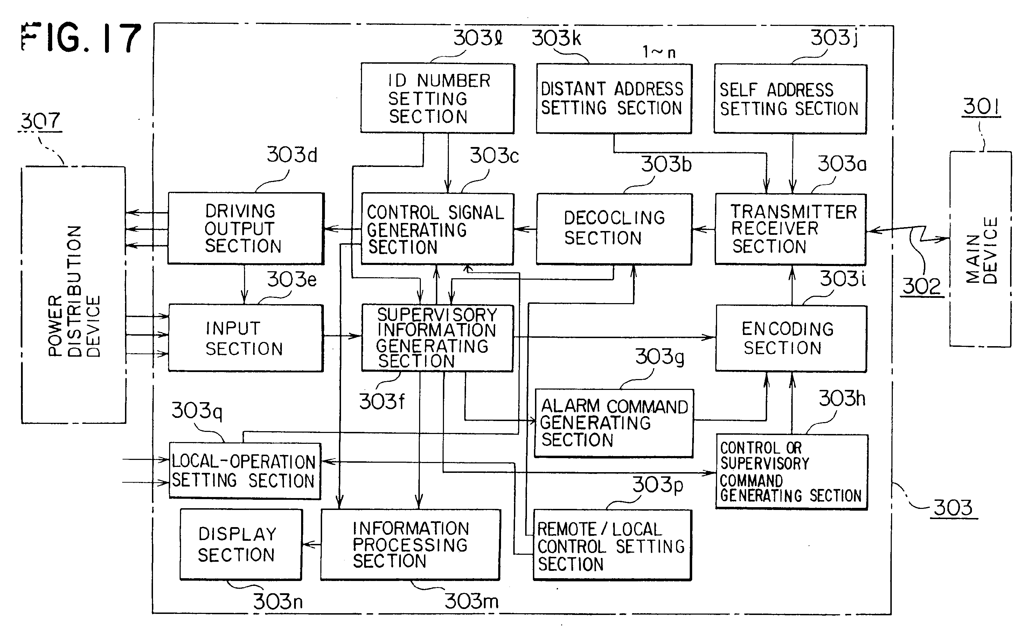

Fig. 17 shows a yet further embodiment which is similar to the embodiment of Fig. 15 except for the fact that a terminal device 303 comprises, in addition to component sections 303a through 303n which are the same as those 103a through 103n of Fig. 15, a remote/local control setting section 303p for setting a remote control mode and a local control mode, and a local-operation input section 303q for receiving an external operation signal. In this embodiment, when the remote/local control setting section 303p sets the remote control mode, it functions to disable an external operation signal inputted to the local-operation input section 303q and allow the operation of the decoding section 303b, whereas when setting the locat control mode, the remote/local control setting section 303p allows an external operation signal to be inputted to the local-operation input section 303q and disables the operation of the decoding section 303b. Although in this embodiment, the remote/local control setting section 303p generates no signals for allowing or disabling the operations of the alarm information generating section 303g and the control and supervisory instruction generating section 303h, the system may be constructed to generate and supply such signals to them. According to this embodiment, with the provision of the remote/local control setting section 303p in the terminal device 303, the power distribution devices 307 connected therewith can be separated or disconnected from the network of the control and supervisory system for independent operation thereof. Accordingly, upon maintenance, it is possible for an inspector to separate or disconnect any of the power distribution devices 307 from the terminal device 303, and then readily operate and inspect them in an efficient manner indepentent of the rest of the system. In addition, there is no possiblity of the thus separated power distribution devices 307 being operated by an erroneous instruction from the main device 301. Further, the system network as a whole can be held alive or in operation during the maintenance of any one(s) of the power distribution devices 303 which are isolated therefrom, thus making it possible to minimize the number of the system components which are to be stopped for this purpose. This leads to a substantial improvement in the operational efficiency of the overall system. Furthermore, during the local control mode, an external operation signal, which is inputted form the outside to the local operation input section 303q of the terminal device 303, may be a macro or simple signal since a prescribed control procedure stored in the control signal generating section 303c of the terminal device 303 can be used for the external operation signal. The use of such a macro or simple external signal serves to simplify the structure of the terminal device 303 and make it easy to handle.

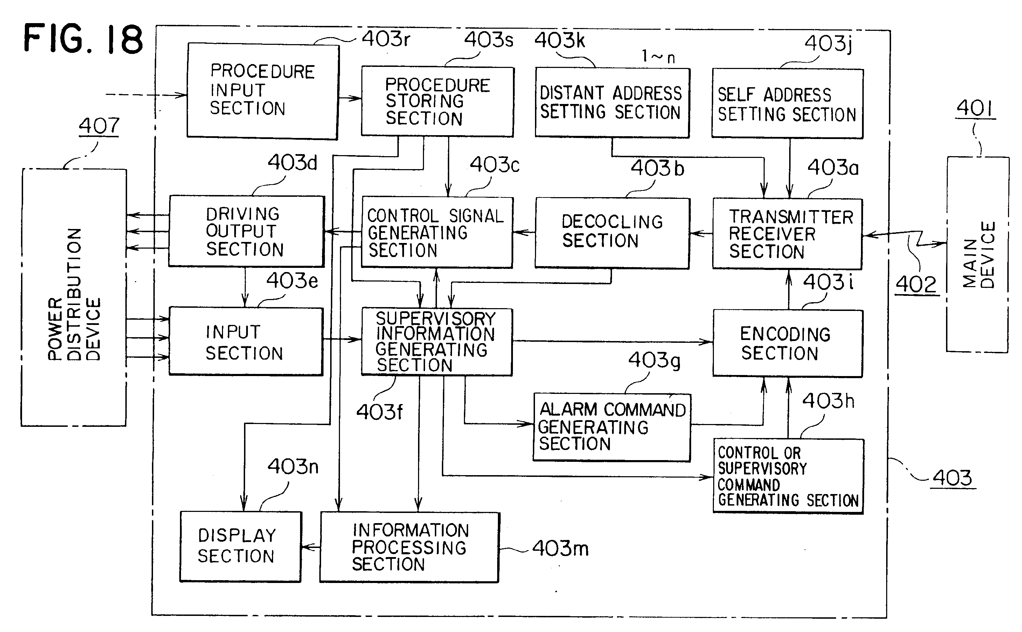

Fig. 18 shows a further embodiment in which a control signal generating procedure or a supervisory information generating procedure for controlling or supervising various kinds of power distribution devices connected with a terminal device can be programmed in the terminal device by an instruction from the outside. This embodiment is similar to the embodiment of Fig. 15 excepting that the ID number setting section 103l of the terminal device 103 of Fig. 15 is replaced by a procedure input section 403r to which a procedure for producing a control signal or supervisory information can be inputted from the outside, and a procedure storing section 403s for storing various procedures inputted to the procedure input section 403r and sending, as required, the respective procedures to the control signal generating section 403c and the supervisory information generating section 403f where appropriate ones of the procedures thus sent are selected and executed by a control or supervisory command transmitted from the main device 401. The procedures stored in the procedure storing section 403s are also sent to the display section 403n where they can be displayed and visually acertained by an operator at the terminal device side. According to this embodiment, an appropriate control signal generating procedure or an appropriate supervisory information generating procedure for the power distribution devices 407 connected to the terminal device 403 can be inputted to the terminal device 403 from the outside so that the terminal device 403 itself has a high degree of freedom in operation. Therefore, should the power distribution devices 407 connected with the terminal device 403 be changed and replaced by new ones, this embodiment can perform optimum control or supervisory operations on the new power distribution devices changed without requiring any change in the system structure.

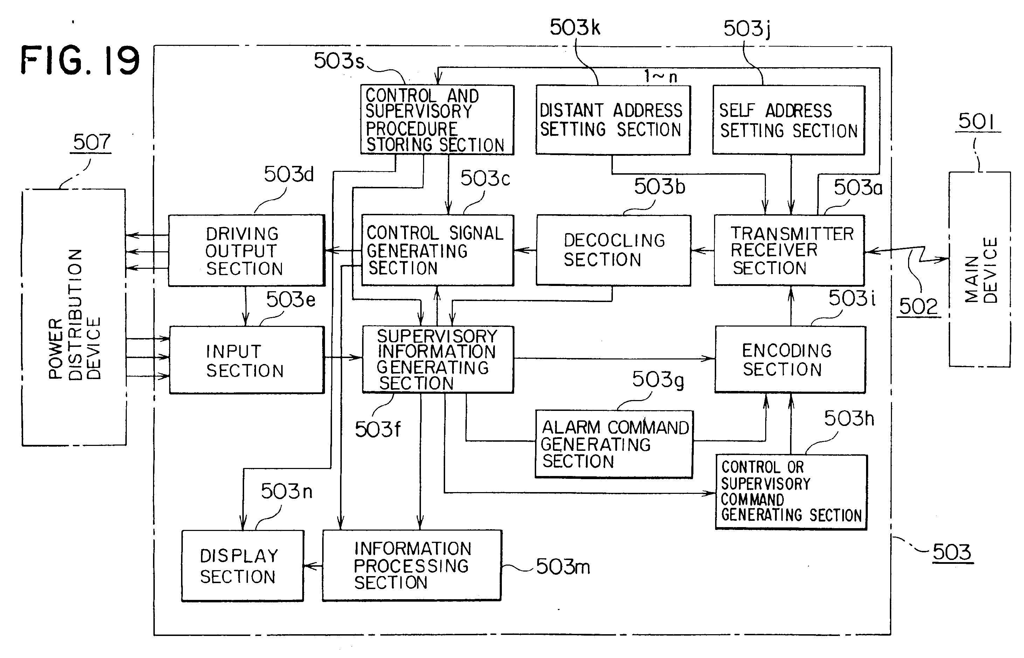

Fig. 19 shows a modification of the embodiment of Fig. 18 which is similar to the Fig. 18 embodiment except for the fact that a terminal device 503 is constructed in such a manner that a control signal generating procedure and a supervisory information generating procedure as used in the Fig. 18 embodiment can be downloaded from a main device 501 into the terminal device 503. Specifically, such procedures are inputted to a transmitter-receiver section 503a of the terminal device 503 from the main device 501 and passed therefrom to a control and supervisory procedure storing section 503s for storage therein. In accordance with a control command or a supervisory command which is inputted to the transmitter-receiver section 503a from the main device 501, appropriate control or supervisory procedures are sent from the control and supervisory procedure storing section 503s to a control signal generating section 503c and a supervisory information generating section 503f where optimum control signals or information are generated. These procedures are formed in the same manner as in the embodiment of Fig. 18 so that they can be visually ascertained through a display section 503n at the teminal device side. In this case, the downloading of the above control and supervisory procedures can generally be carried out at the time of initializing the system, but such optimum control or supervisory procedures can instead be sent from the main device 501 to the terminal device 503 simultaneously with the execution of a command, i.e., at the same time when a command is transmitted from the main device 501 to the terminal device 503. Thus, in this modification, optimum procedures can be sent from the main device 501 to the terminal device 503 in accordance with the kinds of the power distribution devices 507 employed, eliminating the need of changing or inputting the respective programs at the terminal device side, as carried out in the Fig. 18 embodiment.

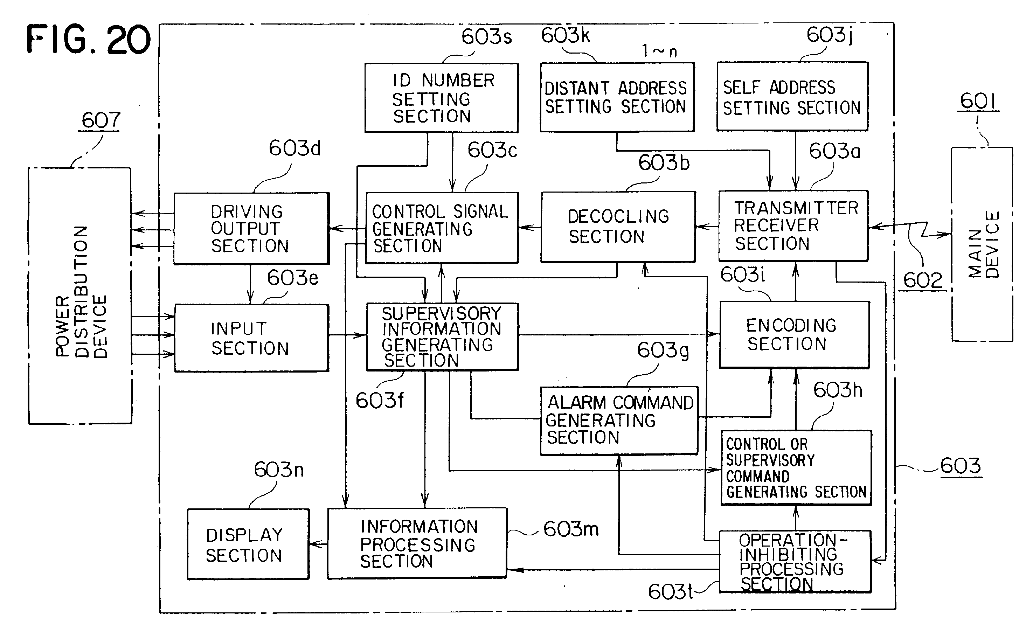

Fig. 20 shows a further embodiment which is different from the embodiment of Fig. 15 only in the feature that a terminal device 603 is further provided with an operation-inhibiting processing section 603t for inhibiting the operations of a decoding section 603b, an alarm information generating section 603g and a control and supervisory instruction generating section 603h. In this embodiment, the main device 601 sends an inhibition instruction to the operation-inhibitiing processing section 603t through a transmitter-receiver section 603a so that the operation-inhibiting processing section 603t operates to inhibit all or part of the operations of the above sections 603b, 603g and 603h. Also, the operation-inhibiting processing section 603t is connected through an information processing section 603m to a display section 603n for displaying an indication of inhibition conditions of the sections 603b, 603g and 603h. As constructed above, when the main device 601 is operating to supervise the operation of the entire system, it can not only inhibit the generation and transmission of alarm, control and supervisory instructions from an inappropriate terminal device or devices but also the operations thereof, so that the system control capability of the main device 601 is improved to a substantial extent, and any unnecessary signal transmission between various component portions of the entire system is eliminated, enhancing the efficiency of utilization of transmission lines employed.

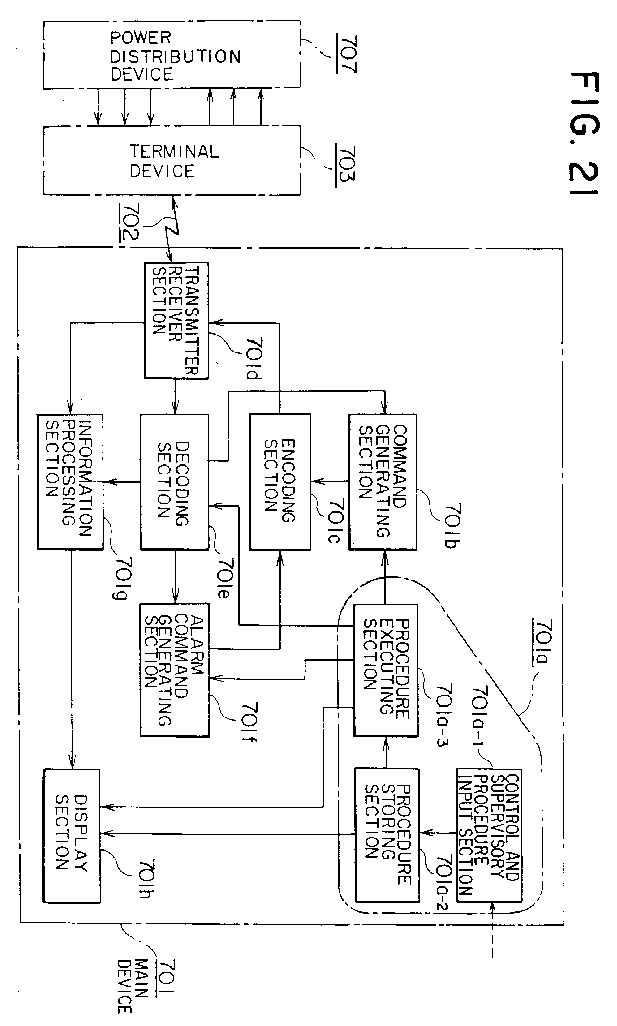

Fig. 21 shows a further embodiment in which a program for executing control and supervisory procedures for controlling and supervising the main device 101 of Fig. 7 can be inputted thereto from the outside, and the procedures thus inputted from the outside, alarm information from terminal devices and the transmitting and receiving conditions can be displayed. Thus, in this embodiment, a main device 701 alone is different from that 101 of the embodiment of Fig. 7, whilst the other elements 702, 703 and 707 of this embodiment remain the same as those 102, 103 and 107 of Fig. 7. The main device 701 comprises, in addition to component sections 701b through 701f which are the same as those 101b through 101f employed in the Fig. 7 embodiment, a control and supervisory procedure input section 701a-1 for receiving control or supervisory procedures inputted from the outside, a procedure storing section 701a-2 for storing the control or supervisory procedures inputted, a procedure executing section 701a-3 for sequentially executing the control or supervisory procedures, an information processing section 701g for processing, under prescribed processing conditions, information about the operating condition of the transmitter-receiver section 701d, and the information about response and alarm signals from the terminal device 703 which are decoded by the decoding section 701e, and a display section 701h connected with the procedure storing section 701a-2 and the procedure executing section 701a-3 and the information processing section 701g for displaying the contents of the inputted programs, procedures which are presently being executed, alarm information from the terminal device 3, and the transmitting and receiving conditions of the transmitter-receiver section 701d. In this embodiment, the control and supervisory procedure input section 701a-1, the procedure storing section 701a-2 and the procedure executing section 701a-3 together constitute a control and supervisory procedure generating section 701a. This embodiment as constructed above can be readily adapted to changes and/or extensions of the system structure of the control and supervisory system, and can display the operating conditions of the terminal devices connected, and the transmitting and receiving conditions of the transmitter-receiver section 701d so that the operator can readily and visually ascertain these conditions in a collective and intensive manner.

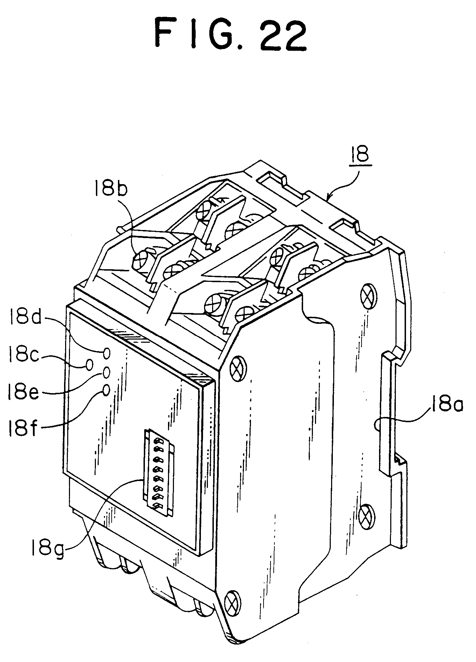

Fig. 22 illustrates an example of a terminal device for an earth-leakge breaker in accordance wth the present invention. The terminal device 18 illustrated comprises a body 18a, connector terminals 18b for signal transmission and reception as well as for outputting driving signals and inputting control and supervisory signals, an LED 18c for indicating transmission conditions, an on-off condition indicating LED 18d for indicating on-off conditions of earth-leakage breakers connected the terminal device 18, a overcurrent and shortcircuit trip condition indicating LED 18e for indicating the operating condition of the overcurrent and shortcircuit trip, an earth-leakage trip condition indicating LED 18f for indicating the operating condition of the earth-leagkage breaker, and an address setting switch 18g for setting the self address of the terminal device 18 and distant addresses of other terminal devices (not shown).

As described in the foregoing, according to the present invention, a control signal generating section and a supervisory information generating section are provided for generating control procedures and supervisory information suitable for controlling and supervising power distribution devices connected therewith, so that the terminal devices can be controlled and supervised by a macro (i.e., relatively rough) control and supervisory instruction, which is conceptionally common to, or intrinsic to a corresponding one of, the power distribution devices, from a main or central device. As a result, programs for the control and supervisory procedures executed by the main device is substantially simplified, and in the control and supervison of various power distribution devices, conceptionally common commands can be utilized for controlling and supervising the varying kinds of power distribution devices. This serves to further simplify the control programs. Further, various kinds of power distribution devices can be controlled and supervised in a simple and easy manner without requiring any substantial and full knowledge of the complicated and troublesome control and supervisory procedures for the power distribution devices. Moreover, for the purpose of the transmission of signals between various component devices, there is no need for sending appropriate control and supervisory procedures from the main device to terminal devices, which would be required in the conventional transmission system, so that the efficiency of utilization of signal transmission lines can be greatly improved, enhancing the program processing capacity of the main device. Therefore, the control and supervisory programs can be simplified and it is possible to provide a control and supervisory system for power distribution devices of high quality at a relatively low cost. Furthermore, in the event that there is a change or abnormality in operation of the respective power distribution devices, the entire system is constructed such that the respective terminal devices directly communicate, through the transmission of alarm commands, supervisory information about a change or abnormality in the corresponding power distribution device to the main device or other terminal device at appropriate instants. Likewise, the terminal devices themselves can generate appropriate control and supervisory commands as necessary independently of the main device, and send such commands to other terminal devices. Thus, the terminal devices do not have to wait for a unilateral control and supervisory procedure such as polling supplied from the main device, thereby reducing a time lag in operation and improving response thereof.

## Claims

1. A control and supervisory system for power distribution equipment comprising:
a plurality of distribution devices (7;107;207;307;407;507;607;707);
instruction means (1;101;201;301;401;501;601;701) operable to output a control command or supervisory command for controlling or supervising at least one of the said power distribution devices (7;107;207;307;407;507;607;707); and
a plurality of terminal devices (103;203;303;403;503;603;703;), each being connected with and responsible for a respective one of the said power distribution devices (7;107;207;307;407;507;607;707) and being operable
(i) to receive the control command or supervisory command from the said instruction means;
(ii) to generate a control signal or supervisory signal of a type suitable for causing the power distribution device (7;107;207;307;407;507;607;707) connected with the terminal device (103;203;303;403;503;603;703;) to obey the instruction command; and
(iii) to output the control signal to the power distribution device (7;107;207;307;407;507;607;707) connected with the terminal device;
characterised in that the command issued by the instruction means is a generic command, which is interpreted by the or each terminal device responsible for the or each power distribution device to which the command relates; the or each terminal device being adapted to generate a command or supervisory signal appropriate to specific characteristics of the or each power distrubution device to which it is connected, the signal being adapted to cause the or each power distribution device to operate in accordance with the generic command; and the or each said terminal device includes an alarm instruction section for outputting an alarm command to the other terminal devices.

2. A device according to Claim 1, wherein the control command or supervisory command is applicable to more than one type of power distribution device (7;107;207;307;407;507;607;707).

3. A device according to Claim 1, wherein the control command or supervisory command is specifically adapted for use in relation to a certain one of the power distribution devices (7;107;207;307;407;507;607;707) or a certain type of the power distribution devices (7;107;207;307;407;507;607;707).

4. A control and supervisory system for power distribution equipment as claimed in any preceding claim, wherein each of said terminal devices includes an instruction section for outputting a control command or supervisory command to the other terminal control devices.

5. A control and supervisory system for power distribution equipment as claimed in any preceding claim, wherein each of said terminal devices outputs a control command or supervisory command when it receives an alarm command from one of the other terminal devices.

6. A control and supervisory system for power distribution equipment as claimed in Claim 5, wherein said alarm command is conceptionally common to said power distribution devices.

7. A control and supervisory system for power distribution equipment as claimed in Claim 5, wherein said alarm command is intrinsic to a corresponding one of said power distribution devices.

## Patentansprüche

1. Steuer- und Überwachungssystem für eine Leistungsverteilungsanlage, das folgendes aufweist:
eine Vielzahl von Verteilereinrichtungen (7; 107; 207; 307; 407; 507; 607; 707);
Anweisungseinrichtungen (1; 101; 201; 301; 401; 501; 601; 701), die betätigbar sind, um einen Steuer- oder Überwachungsbefehl zur Steuerung oder Überwachung wenigstens einer der Leistungsverteilereinrichtungen (7; 107; 207; 307; 407; 507; 607; 707) abzugeben; und
eine Vielzahl von Endeinrichtungen (103; 203; 303; 403; 503; 603; 703), die jeweils mit einer entsprechenden der Leistungsverteilereinrichtungen (7; 107; 207; 307; 407; 507; 607; 707) verbunden und dafür zuständig sind und die betätigbar sind,
(i) um den Steuerbefehl oder Überwachungsbefehl von den Anweisungseinrichtungen zu empfangen;
(ii) um ein Steuersignal oder Überwachungssignal eines Typs zu erzeugen, der geeignet ist, um zu bewirken, daß die mit der Endeinrichtung (103; 203; 303; 403; 503; 603; 703) verbundene Leistungsverteilereinrichtung (7; 107; 207; 307; 407; 507; 607; 707) den Anweisungsbefehl befolgt; und
(iii) um das Steuersignal an die mit der Endeinrichtung verbundene Leistungsverteilereinrichtung (7; 107; 207; 307; 407; 507; 607; 707;) abzugeben;
dadurch gekennzeichnet, daß der von der Anweisungseinrichtung abgegebene Befehl ein Auswahlbefehl ist, der von der oder jeder Endeinrichtung, die für die oder jede Leistungsverteilereinrichtung zuständig ist, auf die der Befehl bezogen ist, interpretiert wird; daß die oder jede Endeinrichtung ausgebildet ist, um ein Befehls- oder Überwachungssignal zu erzeugen, das für spezifische Charakteristiken der oder jeder Leistungsverteilereinrichtung, mit der sie verbunden ist, geeignet ist, wobei das Signal bestimmt ist, um die oder jede Leistungsverteilereinrichtung zu veranlassen, nach Maßgabe des Auswahlbefehls wirksam zu werden; und daß die oder jede Endeinrichtung einen Alarmbefehlsteil hat, um einen Alarmbefehl an die übrigen Endeinrichtungen abzugeben.

2. Vorrichtung nach Anspruch 1, wobei der Steuerbefehl oder Überwachungsbefehl bei mehr als einem Typ von Leistungsverteilereinrichtung (7; 107; 207; 307; 407; 507; 607; 707) anwendbar ist.

3. Vorrichtung nach Anspruch 1, wobei der Steuerbefehl oder Überwachungsbefehl speziell zur Verwendung in bezug auf eine bestimmte der Leistungsverteilereinrichtungen (7; 107; 207; 307; 407; 507; 607; 707) oder einen bestimmten Typ der Leistungsverteilereinrichtungen (7; 107; 207; 307; 407; 507; 607; 707) ausgebildet ist.

4. Steuer- und Überwachungssystem für eine Leistungsverteilungsanlage nach einem der vorhergehenden Ansprüche, wobei jede der Endeinrichtungen einen Anweisungsteil aufweist, um einen Steuerbefehl oder Überwachungsbefehl an die übrigen Endeinrichtungen abzugeben.

5. Steuer- und Überwachungssystem für eine Leistungsverteilungsanlage nach einem der vorhergehenden Ansprüche, wobei jede der Endeinrichtungen einen Steuerbefehl oder Überwachungsbefehl abgibt, wenn sie von einer der übrigen Endeinrichtungen einen Alarmbefehl empfängt.

6. Steuer- und Überwachungssystem für eine Leistungsverteilungsanlage nach Anspruch 5, wobei der Alarmbefehl den Leistungsverteilereinrichtungen konzeptionell gemeinsam ist.

7. Steuer- und Überwachungssystem für eine Leistungsverteilungsanlage nach Anspruch 5, wobei der Alarmbefehl einer jeweiligen der Leistungsverteilereinrichtungen eigen ist.

## Revendications

1. Un système de commande et de supervision pour équipement de distribution de puissance comprenant :
une pluralité de dispositifs de distribution (7 ; 107 ; 207; 307; 407 ; 507 ; 607 ; 707) ;
des moyens d'instruction (1 ; 101 ; 201 ; 301 ; 401 ; 501 ; 601 ; 701) susceptibles d'être mis en service pour produire en sortie un ordre de commande ou un ordre de supervision pour commander ou superviser au moins l'un des dispositifs de distribution de puissance (7 ; 107 ; 207 ; 307 ; 407 ; 507 ; 607 ; 707) ; et
une pluralité de dispositifs de borne ou blocs de connexion (103 ; 203 ; 303 ; 403 ; 503 ; 603 ; 703) chacun étant relié et sensible à l'un respectif desdits dispositifs de distribution de puissance (7 ; 107 ; 207 ; 307 ; 407 ; 507 ; 607 ; 707) et étant susceptible d'être mis en service
(i) pour recevoir l'ordre de commande ou l'ordre de supervision desdits moyens d'instruction ;
(ii) pour engendrer un signal de commande ou un signal de supervision d'un type approprié pour amener le dispositif de distribution de puissance (7 ; 107 ; 207 ; 307 ; 407 ; 507 ; 607; 707) connecté au dispositif de borne de connexion (103 ; 203 ; 303 ; 403 ; 503 ; 603 ; 703) à obéir à l'ordre d'instruction ; et
(iii) pour produire en sortie le signal de commande pour le dispositif de distribution de puissance (7 ; 107 ; 207 ; 307 ; 407 ; 507 ; 607 ; 707) relié au dispositif de borne ;
caractérisé en ce que l'ordre émis par les moyens d'instruction est un ordre générique qui est interprété par le ou chaque dispositif de borne de connexion sensible au ou à chaque dispositif de distribution de puissance que l'ordre concerne ; le ou chaque dispositif de borne étant adapté pour engendrer un signal d'ordre ou de supervision approprié aux caractéristiques spécifiques du ou de chaque dispositif de distribution de puissance auquel il est connecté, le signal étant adapté pour amener le ou chaque dispositif de distribution de puissance à fonctionner selon l'ordre général ; et le ou chaque dispositif de borne comprend une section d'instruction d'alarme pour produire en sortie un ordre d'alarme pour les autres dispositifs de borne de connexion.

2. Un dispositif selon la revendication 1, dans lequel l'ordre de commande ou l'ordre de supervision est applicable à plus qu'un type de dispositif de distribution de puissance (7 ; 107 ; 207 ; 307 ; 407 ; 507 ; 607 ; 707).

3. Un dispositif selon la revendication 1, dans lequel l'ordre de commande ou l'ordre de supervision est spécifiquement adapté pour être utilisé en relation avec un certain des dispositifs de distribution de puissance (7 ; 107 ; 207 ; 307 ; 407 ; 507 ; 607 ; 707) ou un certain type des dispositifs de distribution de puissance (7 ; 107 ; 207 ; 307 ; 407 ; 507 607; 707).

4. Système de commande et de supervision pour équipement de distribution de puissance tel que revendiqué dans l'une quelconque des revendications précédentes, dans lequel chacun des dispositifs de borne de connexion précités comprend une section d'instruction pour produire en sortie un ordre de commande ou un ordre de supervision à destination des autres dispositifs de commande de borne de connexion.

5. Système de commande et de supervision pour équipement de distribution de puissance tel que revendiqué dans l'une quelconque des revendications précédentes, dans lequel chacun des dispositifs de borne précités produit en sortie un ordre de commande ou un ordre de supervision lorsqu'il reçoit un ordre d'alarme de l'un des autres dispositifs de borne de connexion.

6. Système de commande et de supervision pour équipement de distribution de puissance selon la revendication 5, dans lequel l'ordre d'alarme précité est conceptionnellement commun aux dispositifs de distribution de puissance précités.

7. Système de commande et de supervision pour équipement de distribution de puissance selon la revendication 5, dans lequel l'ordre d'alarme précité est intrinsèque de l'un des dispositifs de distribution de puissance précités.
